## Europäisches Patentamt
## European Patent Office
## Office européen des brevets

(19)

(11) Numéro de publication: **0 155 887**
**B1**

(12) # FASCICULE DE BREVET EUROPÉEN

(45) Date de publication du fascicule du brevet: **29.04.87**

(51) Int. Cl.⁴: **B 64 D 29/00, F 02 K 3/04**

(21) Numéro de dépôt: **85400427.2**

(22) Date de dépôt: **06.03.85**

(54) **Capotages structuraux participant à la rigidité d'ensemble d'un turboréacteur.**

(30) Priorité: **07.03.84 FR 8403509**

(43) Date de publication de la demande:
**25.09.85 Bulletin 85/39**

(45) Mention de la délivrance du brevet:
**29.04.87 Bulletin 87/18**

(84) Etats contractants désignés:
**DE FR GB**

(56) Documents cité:
**FR-A-2 295 876**
**GB-A-2 061 389**
**US-A-4 361 296**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Naud, Henry, 7, allée des Briolettes, F-91370 Verrieres le Buisson (FR)**

(74) Mandataire: **Moinat, François, S.N.E.C.M.A. Service des Brevets Boîte Postale 81, F-91003 Evry Cedex (FR)**

EP 0 155 887 B1

## Description

L'invention concerne des capotages participant à la rigidité d'ensemble d'un turboréacteur à double flux à flux séparés, comportant un capotage structural fixé entre une bride avant et une bride arrière du carter moteur.

L'augmentation du coût du carburant à incité les motoristes à améliorer l'efficacité des moteurs et pour ce à supprimer des défauts qui précédemment apparaissaient comme d'importance secondaire.

Ainsi leur attention s'est portée sur les faibles déformations se produisant dans la zone primaire du moteur et dues aux sollicitations de flexion. Ces flexions ont pour résultat d'augmenter le jeu en bout d'aubages et ainsi de diminuer l'efficacité du moteur.

Par suite de la forme en "taille de guêpe" du moteur, le seul renforcement du carter n'aurait presque abouti qu'à une augmentation de poids, sans apporter les résultats escomptés. Une solution à ce problème a été décrite dans l'article "Structural load carrying engine cowls" de K.W. Porter paru dans les pages 54, 55 du numéro d'octobre 1981 de la revue "Astronautic and Aeronautics", ce dispositif connu correspondant aux caractéristiques selon le préambule de la revendication 1. Le carter moteur renfermant le moteur est maintenu à l'avant dans une virole fixée au carter de soufflante et à l'arrière dans un anneau support. La virole et l'anneau sont supportés directement ou indirectement par le pylône.

Le capotage structural est formé de deux demi capotages semi cylindriques comportant des membrures radiales et des entretoises longitudinales.

Les bords avant des demi-capotages sont munis d'une languette radiale de section en V, dirigée vers le centre. La virole avant porte une rainure annulaire de profil complémentaire de celle de la languette.

Les bords arrière des demi capotages portent un profilé prévu pour s'adapter sur la périphérie de l'anneau support arrière. Les demi capotages sont articulés par leurs bords longitudinaux supérieurs à une plaque de structure et sont reliés par des vérins qui permettent, lorsque des verrous, placés sur les bords longitudinaux inférieurs des demi capotages, sont fermés, d'appliquer une traction sur les deux demi capotages et d'assurer ainsi un serrage positif sur les fixations avant et arrière. On obtient ainsi un capotage de grande rigidité qui reprend les efforts auquel le carter est soumis.

Si le capotage structural tel que décrit a permis une diminution substantielle de la déformation mécanique du carter, il n'en est pas de même pour la déformation due à la température. En effet, les températures le long du carter sont très différentes de celles prises par le capotage et, par suite du bridage longitudinal du carter, la déformation longitudinale bien que de faible amplitude produit néanmoins des efforts importants qui limitent l'efficacité du dispositif.

L'invention a pour but un capotage structural d'un type semblable à celui précédemment décrit mais comportant des moyens éliminant les inconvénients dus à l'expansion thermique du moteur, assurant la continuité aérodynamique du flux et les étanchéités tout en permettant l'accès aisé au moteur équipé et répondant éventuellement aux contraintes d'un inverseur de poussée sur la soufflante.

Le dispositif selon l'invention est remarquable en ce qu'au moins un dispositif de fixation a dilatation, permettant la dilatation thermique du carter moteur est prévu entre le capotage structural intérieur et une des brides du carter moteur. Selon un premier mode de l'invention, le dispositif de fixation comprend un moyen de coulissement autorisant la libre dilatation différentielle longitudinale entre carter et capot.

Selon un deuxième mode, le dispositif de fixation comprend un moyen de liaison au carter constitué par un dispositif à au moins trois broches de liaison régulièrement espaces, une extrémité des broches étant fixée dans un support du carter moteur, l'autre extrémité coopérant avec l'alésage d'un corps sphérique maintenu dans un palier fixé au carter moteur.

Les explications et figures données ci-après, à titre d'exemples, permettront de comprendre comment l'invention peut être réalisée.

La figure 1 est une vue schématique en coupe verticale d'un moteur logé en nacelle comportant un exemple de capotage structural conforme à l'invention.

La figure 2 est une vue en coupe selon II-II de la figure 1.

La figure 3 est une vue en coupe selon III-III de la figure 2.

La figure 4 est une vue en coupe selon IV-IV de la figure 1.

La figure 5 est une vue en coupe d'une broche de liaison du carter moteur à l'anneau de fixation.

La figure 6 est une vue en coupe d'un element du dispositif de fixation coulissante du carter selon un exemple de réalisation.

La figure 7 est une vue d'un deuxième exemple de dispositif de fixation coulissante du carter.

La figure 8A et 8B montrent les positions relatives des dispositifs à broches radiales et à broches axiales.

La figure 9A est une vue en coupe d'un carénage du type en C fermé.

La figure 9B est une vue en coupe d'un carénage du type en C ouvert.

La figure 10A est une vue en coupe radiale d'un carénage du type en D fermé.

La figure 10B est une vue en coupe radiale d'un carénage du type en D ouvert.

La figure 11 est une vue en plan d'une plaque support de vérins.

La figure 12A est une demi-coupe d'un turboréacteur avec inverseur de flux de soufflante en position inactive.

La figure 12B est la même demi-coupe que la figure 12A l'inverseur étant en position active.

La figure 13A est une vue en coupe radiale d'un capotage fermé d'un moteur à inversion de flux en "position active" et "inactive".

La figure 13B est une vue en coupe radiale d'un capotage ouvert de réacteur à inversion de flux.

La figure 14 est une vue agrandie du détail XIV de la figure 13A.

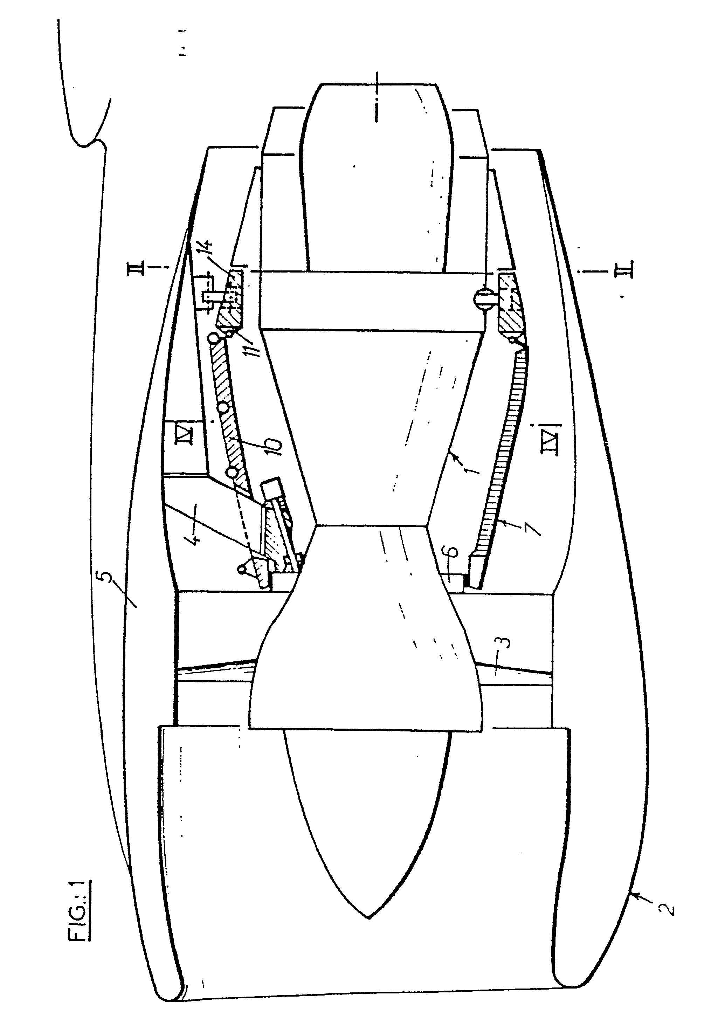

La figure 1 montre une coupe schématique d'un turboréacteur à double flux et flux séparés, monté en nacelle sous les ailes d'un avion. Le moteur, maintenu dans son carter 1, est prolongé vers l'avant par une soufflante 2 dont le carter est fixé au carter moteur, de manière connue, par des entretoises 3.

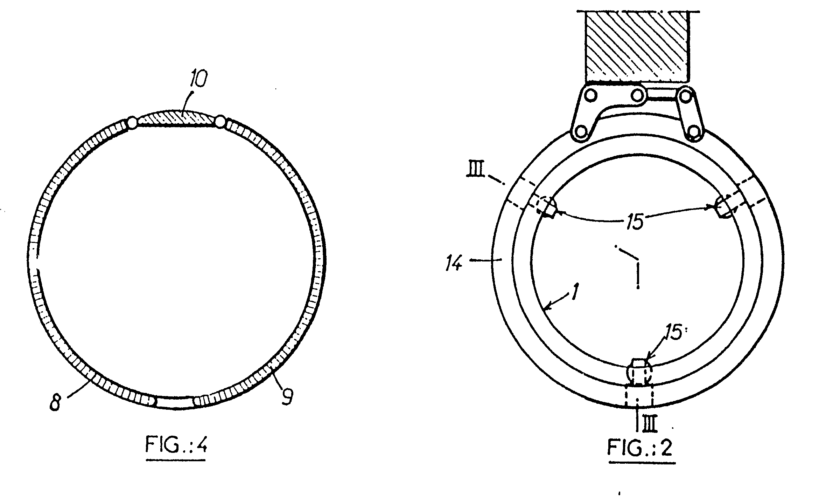

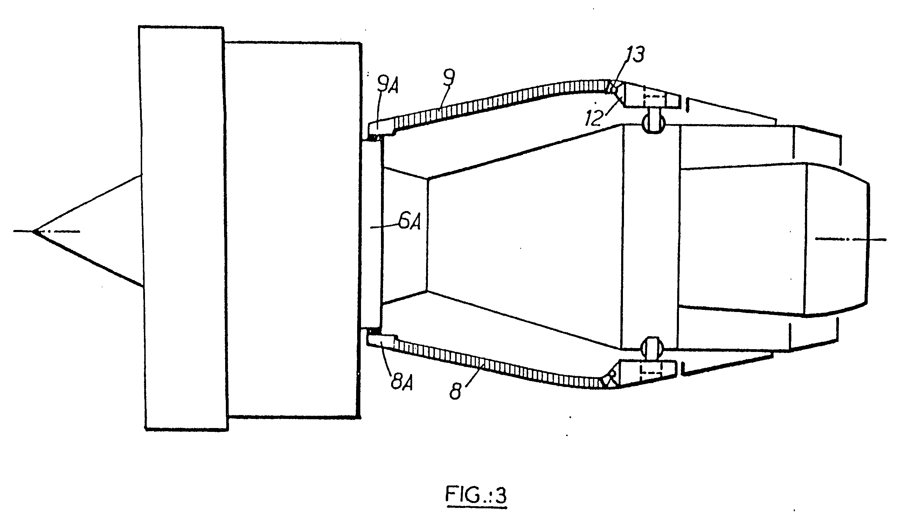

Le moteur est suspendu au pylône 4 par des dispositifs connus tels que vis, pattes, ou autres moyens de fixation qui seront ultérieurement précisés. Le carter de la soufflante porte un carénage extérieur 5 se prolongeant vers l'arrière sur au moins une partie du carter moteur. Ce carénage détermine un passage pour le flux d'air de dilution provenant de la soufflante. Selon la forme de réalisation représentée, le carénage extérieur est traversé au moins partiellement par le pylône 4. Afin d'assurer un passage aérodynamique convenable au flux d'air de dilution, il est prévu un capotage 7 entre la bride avant 6 de fixation du moteur et l'entrée de tuyère. Le capotage recouvre la partie du moteur correspondant approximativement au compresseur haute pression, aux chambres de combustion, à la turbine de sortie et à l'entrée de tuyère. Afin de minimiser les déformations de cette zone du moteur, le capotage 7 est renforcé de manière à participer à la rigidité du carter moteur. De manière connue, le capotage est formé de deux coquilles 8, 9 approximativement demi-cylindriques renforcées intérieurement par des membrures radiales et longitudinales (figures 3, 4). Dans l'exemple de réalisation représenté, les coquilles 8 et 9 sont articulées sur une plaque de tension supérieure 10 par leurs bords longitudinaux supérieurs. Cette plaque est traversée par les moyens de suspension du moteur constitué par une partie du pylône 4. Les bords longitudinaux intérieurs portent des verrous permettant leur accrochage. Des vérins non représentés assurent l'ouverture du capotage en cas d'intervention sur le moteur et le serrage des coquilles contre les brides de fixation avant 6 et arrière 11 prévues sur le carter moteur. Le serrage permet la transmission des efforts du carter moteur à l'ensemble rigide constitué par les coquilles 8 et 9 formant le capotage interne 7.

Selon une forme de réalisation de l'invention, la bride de fixation avant 6 comporte une virole cylindrique 6A sur laquelle viennent se serrer radialement les portées cylindriques 8A et 9A intérieures avant des coquilles 8 et 9. La bride de fixation arrière 11 comporte sur sa circonférence une gorge à section triangulaire 12 dans laquelle vient se serrer radialement et se bloquer axialement une dent 13 radiale prévue à l'extrémité arrière et à l'intérieur des coquilles. La plaque de tension est elle-même flottante en appui à l'amont et à l'aval sur la virole 6A et la bride 11.

Par suite de la fixation d'une extrémité par des portées cylindriques permettant un déplacement axial, le carter moteur est susceptible de se dilater axialement sans subir de contraintes importantes et, par suite, des déformations.

Afin de permettre l'expansion thermique du moteur, au niveau du carter d'échappement sur lequel est fixée la bride arrière, celle-ci est constituée d'un anneau 14 rendu solidaire du carter par trois dispositifs à broche radiale de liaison 15 angulairement répartis dans l'exemple représenté ils sont disposés à 120°C comme montré sur la figure 2.

Cet anneau 14 est relié, de façon connue, au pylône 4 par un système à biellettes comme représenté à la figure 2 pour la suspension de la partie arrière du moteur.

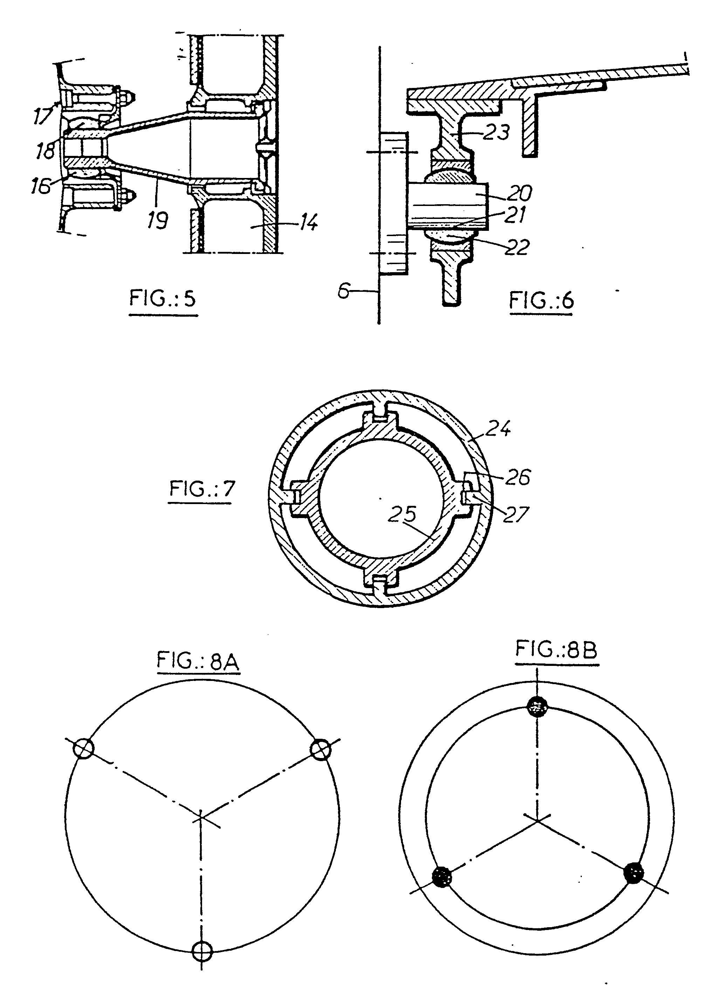

Selon un exemple de réalisation, le dispositif à broche radiale (figure 5) comporte une articulation à rotule 16 dont le palier 17 est fixé au carter. Le corps spherique 18 est monté sur une extrémité de la broche 19. L'autre extrémité étant fixée dans l'anneau support 14. L'extrémité de broche coopérant avec le corps sphérique est, . éventuellement, susceptible de coulisser dans un alésage du corps sphérique.

Selon une autre forme de réalisation de la liaison avant du capotage, il est prévu une fixation par des dispositifs à broche axiale (figure 6). La bride avant 6 est pourvue de broches axiales 20 qui sont susceptibles de coulisser dans la partie cylindrique 21 prévue dans le corps sphérique 22 d'une rotule maintenue dans un cadre circulaire 23. Cet accouplement permet une fixation positive du capotage sur le cadre qui peut être de tout type connu, par exemple, boulonnage, collier en U, serrage à bride à démontage rapide. Chaque ouverture du capotage ne risque donc pas de déformer la partie coulissante ou de dérégler les conditions de coulissement.

Si l'on prévoit deux fixations à broches, broches axiales à l'avant, broches radiales à l'arrière, il est souhaitable d'inverser la position des fixations avant et arrière de manière qu'elles se trouvent diamétralement opposées. Selon l'exemple représenté figures 8A et 8B, les dispositifs avant (8A) sont diamétralement opposés aux dispositifs arrière (8B).

Selon une forme de réalisation d'une fixation acceptant une dilatation tant radiale qu'axiale, on réalise un accouplement (figure 7) entre la bride 6 et le bord du capotage constitué de deux anneaux coaxiaux 24, 25 disposés l'un dans l'autre et coopérant par l'intermédiaire de cannelures 26 et de dents 27 disposées sur leurs faces en regard, ajustées périphériquement et laissant entre elles un jeu radial. Les surfaces coopérant à la transmission des efforts sont de dimensions suffisantes pour diminuer les frottements et peuvent être éventuellement à rattrapage de jeu.

L'exemple représenté est une fixation à quatre "dents" dans laquelle on constate qu'une flexion dans le plan vertical passe dans le capotage et est transmise à l'avant par les deux "dents" horizontales.

Une telle fixation doit comporter au moins trois dents, un nombre plus important peut être choisi en fonction des efforts à absorber. Comme les efforts sont plus importants dans des plans radiaux proches de l'horizontale, on peut en tenir compte non seulement dans le nombre mais également dans l'épaisseur des "dents" horizontales par rapport aux "dents" verticales.

Comme dans la forme de réalisation précédente le capotage est fixé sur l'anneau extérieur 24 par des moyens amovibles permettant le serrage du capotage sur l'anneau 24.

Comme il a été précédemment évoqué, afin de faciliter l'accès au carter moteur, le capotage structural 8, 9 a été prévu en deux parties et des moyens permettent le relevage des coquilles, mais ce capotage "interieur" est recouvert au moins en partie par le capotage "extérieur" 5 de la soufflante. Ce capotage est formé, au moins dans sa partie arrière correspondant au capotage intérieur, de deux coquilles 28, 29 maintenues à leur partie supérieure par des articulations 30 fixées, par exemple sur le pylône, et fermées à leur partie inférieure de manière connue par des verrous (non représentés).

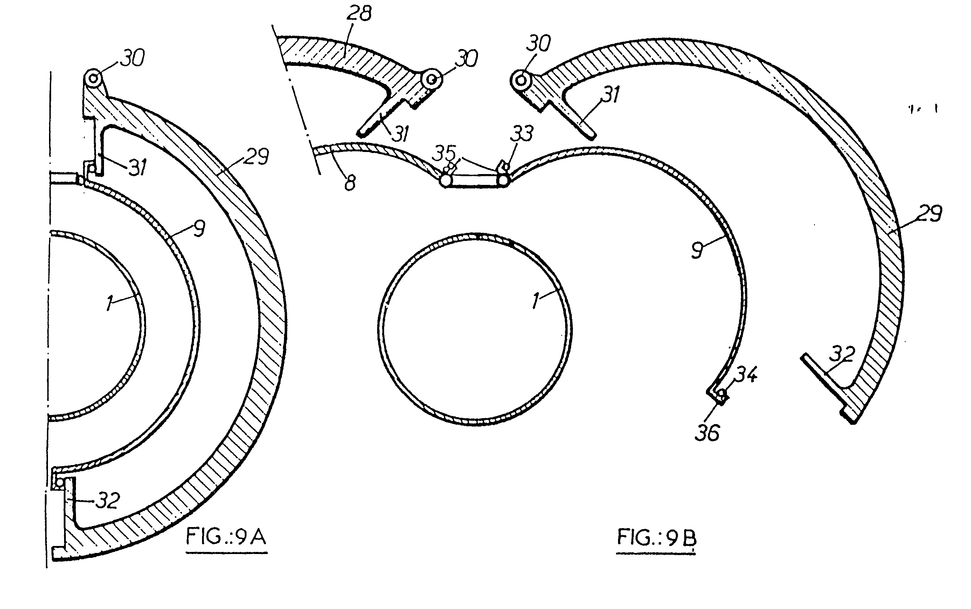

Selon la forme de réalisation représentée figures 9A et 9B les coquilles 8, 9 formant le capotage intérieur et les coquilles 28 et 29 formant le capotage extérieur sont articulées séparemment et peuvent s'ouvrir de même. Les coquilles du capotage extérieur portent sur leur surface intérieure des ailes longitudinales 31, 32 dirigées vers l'intérieur, de hauteur suffisante pour venir coopérer avec un joint 33, 34 porté par un rebord 35, 36 des coquilles du capotage intérieur, et assurer l'étanchéité du canal du flux secondaire. Ce type de capotage est appelé capotage de type C. Dans cette forme de réalisation, les capotages intérieurs et extérieurs étant indépendants les charges auxquelles est soumis le premier ne sont pas transmises au second.

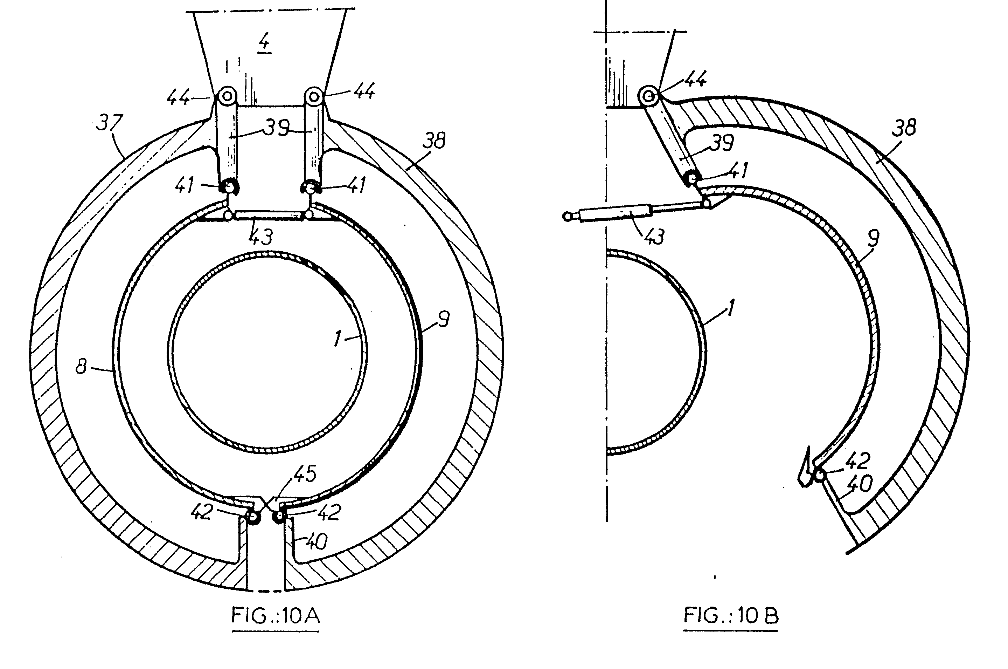

Cependant, il peut être avantageux de réaliser l'enveloppe du flux secondaire à partir d'éléments solidarisés les uns aux autres afin d'améliorer la tenue de cette enveloppe aux efforts de pression. Mais si le système d'inverseur de poussée est monté sur le capot externe, il faut éviter la transmission des charges entre les deux capotages. Enfin, il faut pouvoir séparer l'élément intérieur de l'élément extérieur. La forme de réalisaion représentée aux figures 10A et 10B répond à ces conditions; les coquilles 37 et 38 du capotage extérieur portent des parois latérales 39, 40, s'étendant longitudinalement d'une extrémité à l'autre et dirigées vers l'intérieur, solidarisées à leur extrémité longitudinale par des joints à glissière 41, 42 aux coquilles 8 t 9 du capotage intérieur. Ces joints sont semblables aux éléments de guidage décrits dans notre demande de brevet français publié sous le numéro 2 496 533 et illustrée à la figure 14. Ces joints permettent une rotation limitée de chaque capot intérieur par rapport à la paroi 39, 40 correspondante. Une certaine flexibilité dans le sens vertical étant également nécessaire, on prévoit une liaison flexible, par ressort à lame par exemple entre ces parois 39, 40 et le joint à glissière. La plaque flottante est remplacée dans cette solution par des vérins (43) à double effet reliés par chaque extrémité à une des coquilles intérieures. Ces vérins assurant le serrage du capotage intérieur sur les brides du carter moteur 1, servent également à l'ouverture des deux capotages qui pivotent autour des articulations 44 fixées sur le pylône 4. Les verrous de fermeture 45 situés sur les bords intérieurs du capotage intérieur assurent également le maintien, en position fermée, du capotage extérieur. Ce type de capotage est appelé capotage de type D.

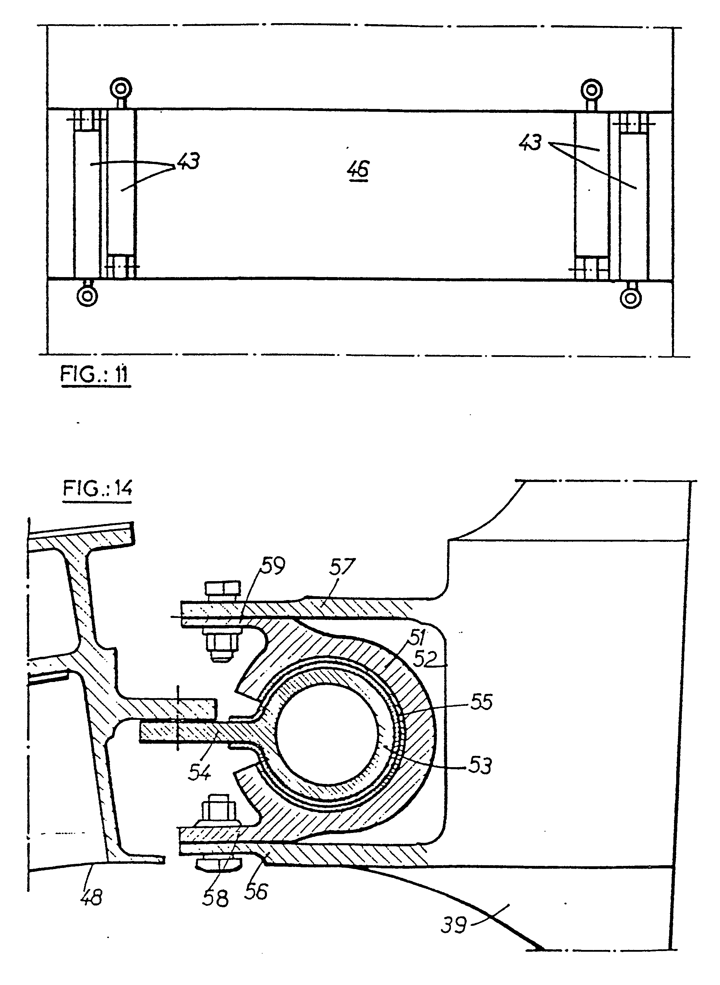

Selon la forme de réalisation représentée figure 11, les vérins 43 sont fixés sur une plaque intermédiaire 46. Ils sont disposés à l'avant et à l'arrière de la plaque. Quoiqu'il soit souhaitable que ces vérins soient alignés deux par deux afin de leur permettre d'agir dans un même plan pour le bouclage avant respectivement arrière, les problèmes d'encombrement peuvent conduire à une disposition où ils sont juxtaposés comme sur la figure 11. La plaque est fixée par boulonnage ou tout autre moyen à l'avant sur le carter ou la bride du carter 6 et à l'arrière sur l'anneau support 14.

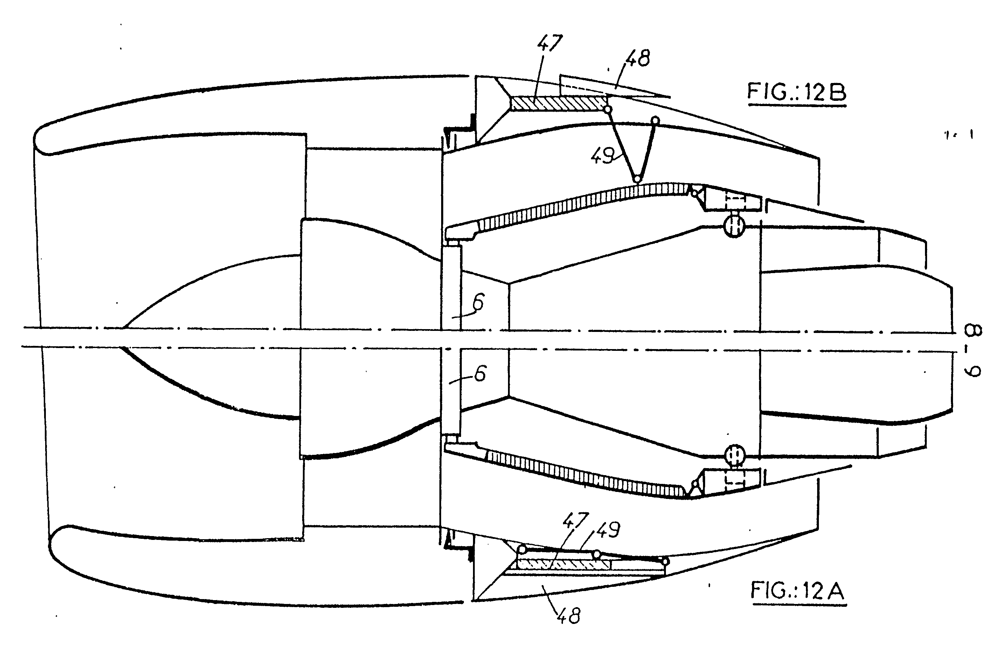

Comme mentionné plus haut, le capotage structural interne peut être adapté au cas d'un inverseur de poussée "soufflante". La figure 12A montre en demi-coupe un turboréacteur avec inverseur de flux sur l'air secondaire, l'inverseur étant inactif. La figure 12B montre le même inverseur en position active.

L'inverseur de poussée, prévu dans le capotage de la soufflante comporte, comme connu, des grilles d'inversion 47 disposées dans l'épaisseur de la nacelle, recouvertes lorsqu'il n'est pas utilisé d'un tronçon mobile 48 de capotage. Lors de l'utilisation, le tronçon 48 est translaté vers l'arrière pour dégager les grilles. Cette manoeuvre entraîne la mise en place des moyens d'obturation 49 de la veine secondaire en arrière des grilles ce qui a pour effet de faire refluer vers l'avant, à travers les grilles, tout le débit d'air provenant de la soufflante. Le tronçon 48 est maintenu dans son mouvement de translation par un dispositif de guidage 50 qui peut être du type de celui décrit dans le brevet français n° 2 496 533 et illustré sur la figure 14. Ces dispositifs sont prévus en nombre suffisant pour permettre la translation et le maintien du tronçon mobile 48.

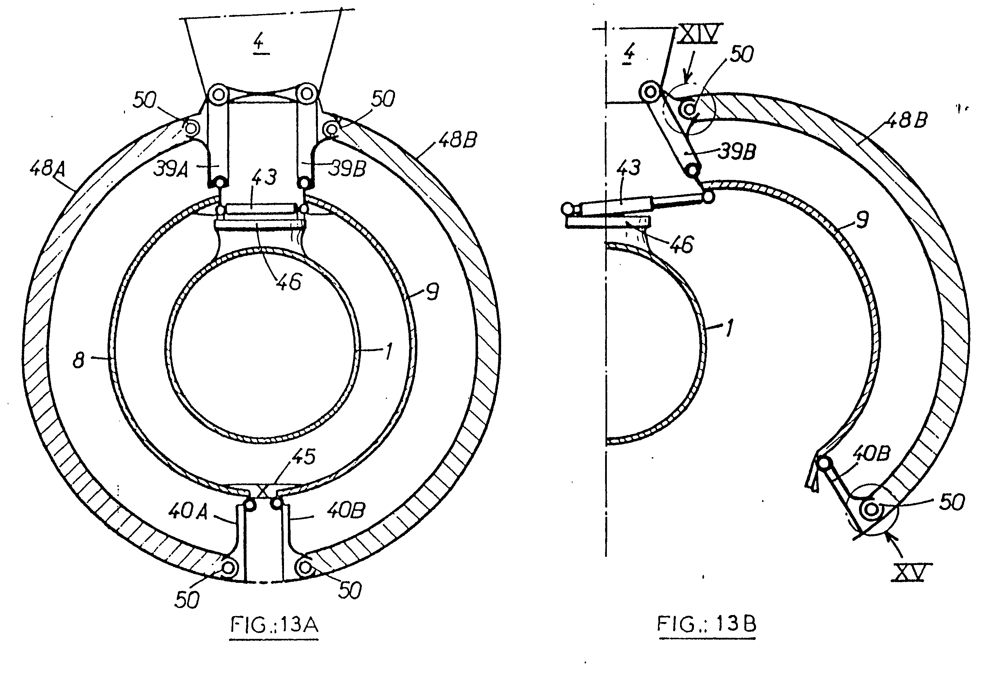

Les figures 13A et 13B représentent un capotage du type D semblable à celui des figures 10A et 10B avec application de la solution de la plaque intermédiaire (figure 11), et montrent le dispositif d'inverseur.

Les dispositifs de guidage 50 sont disposés entre les parois latérales 39A, 39B, 40A, 40B et les tronçons 48A, 48B des coquilles 37, 38. Ces dispositifs sont constitués (figure 14) d'un rail de guidage 51 présentant une rainure cylindrique, fixé sur l'élément d'ossature 52 prolongeant la paroi latérale 39 ou 41. Dans la rainure coulisse un corps tubulaire cylindrique 53 comportant selon une génératrice une aile 54 dont l'extrémité est fixée par tout moyen connu sur le bord latéral du tronçon de capotage. Une fourrure 55, en un matériau presentant des bonnes caracteristiques de glissement et de résistance à l'usure, est interposée entre le rail et le corps tubulaire cylindrique.

Selon la réalisation représentée figure 14, l'élément d'ossature 52 porte latéralement deux ailes 56, 57 formant une rainure un U dans laquelle vient se fixer, par deux ailes parallèles 58, 59 le rail de guidage 51.

Le tronçon mobile 48 est formé comme le capotage extérieur de deux coquilles 48A et 48B qui sont fixées aux parois transversales supérieures 39A, 39B et inférieures 40A et 40B par les dispositifs de guidage 50. Lorsque le tronçon mobile 48 recouvre les grilles, le capotage peut s'ouvrir sous l'action des vérins 43, fixés sur la plaque support 46, maintenus entre la bride avant et l'anneau arrière du carter moteur 1, agissant sur le capotage structural interne 8, 9. Les bords inférieurs des deux parties de capotage 8, 9 portent, comme précédemment décrit, les verrous 45 assurant leur liaison.

Sans sortir du cadre de l'invention, on peut envisager d'autres modes de réalisation qui n'ont pas été représentés; par exemple suivant les applications, les moyens de coulissement longitudinaux pourraient être disposés à l'aval plutôt qu'à l'amont; inversement le dispositif à broches radiales pourrait être monté à l'amont.

## Revendications

1. Capotages structuraux participant à la rigidité d'ensemble d'un turboréacteur à double flux à flux séparés comportant un capotage structural intérieur (7) formé de deux coquilles latérales (8, 9), fixé par l'intermédiaire de moyens de serrage entre une bride avant (6) et une bride arrière (11) d'un carter moteur (1) et un capotage extérieur (5) canalisant le flux secondaire, caractérisés en ce qu'au moins un dispositif de fixation (6A, 8A, 9A ; 15 ; 20-23 ; 24-25) permettant la libre dilatation thermique du carter moteur est prévu entre le capotage structural intérieur et une des brides du carter moteur.

2. Capotages structuraux selon la revendication 1 caractérisés en ce que le dispositif de fixation comprend un moyen de coulissement autorisant la libre dilatation différentielle longitudinale entre carter (1) et capotage intérieur (7).

3. Capotages structuraux selon la revendication 2, caractérisés en ce que le dispositif de fixation à dilatation est constitué par au moins une portée annulaire (8A, 9A) du bord intérieur d'une extrémité du capotage structural intérieur (7) et par la surface extérieure d'une virole cylindrique (6A) portée par une bride (6) du carter moteur (1), la portée annulaire étant formée de deux parties semi-annulaires serrées contre la surface de la virole.

4. Capotages structuraux selon la revendication 2, caractérisés en ce que le dispositif de fixation à dilatation est constitué par un dispositif à au moins trois broches axiales (20) de liaison régulièrement espacées dont une extrémité coopère avec l'alésage d'un corps sphérique (22); l'un des deux éléments, broche ou corps sphérique étant solidaire d'un support (6) du carter moteur, l'autre élément étant solidaire d'un cadre circulaire (23) sur lequel est fixée et serrée chacune des coquilles laterales (8, 9) par le bord interieur d'une de ses extrémités.

5. Capotages structuraux selon la revendication 2 caractérisés en ce que le dispositif de fixation à dilatation est constitué de deux anneaux coaxiaux (24, 25) disposés l'un dans l'autre et comportant sur leurs faces en regard au moins trois cannelures (26) et des dents (27) coopérantes réparties péripheriquement et laissant entre elles un jeu radial ; l'un des bords d'une extrémité de chaque coquille latérale (8, 9) étant fixé et serré sur l'anneau (24) extérieur à l'autre (25) ce dernier étant solidaire au support (6) de carter de moteur.

6. Capotages structuraux selon la revendication 1, caractérisés en ce que le dispositif de fixation à dilatation est constitué par un dispositif à au moins trois broches radiales de liaison (15) régulièrement espacées, une extrémité des broches (19) étant fixée dans un support (14) du carter moteur (1), l'autre extrémité coopérant avec l'alésage d'un corps sphérique (18) maintenu dans un palier (17) fixé au carter moteur.

7. Capotages structuraux selon l'une des revendications 2 à 5 et la revendication 6 caractérisés en ce que deux dispositifs de fixation à dilatation sont prévus pour la fixation du capotage intérieur ; ledit capotage intérieur (7) étant fixé à l'amont par un dispositif comprenant un moyen de coulissement axial et à l'aval par un dispositif à broches radiales (15).

8. Capotages structuraux selon l'une des revendications 2 à 5 et la revendication 6 caractérisés en ce que deux dispositifs de fixation à dilatation sont prévus pour la fixation du capotage intérieur (7); ledit capotage intérieur étant fixé à l'amont par un dispositif à broches radiales (15) et à l'aval par un dispositif comprenant un moyen de coulissement axial.

9. Capotages structuraux selon l'une des revendications 7 ou 8 caractérisés en ce que le dispositif à coulissement axial étant à broches axiales, celles-ci sont disposées en quinconce par rapport aux broches radiales de l'autre dispositif.

10. Capotages structuraux selon les revendications 7 à 9 caractérisés en ce que le bord aval de chaque coquille (8, 9) de capotage intérieur prend appui par une liaison du type dent-gorge annulaire (13, 12) sur un anneau support (14) lui-même relié au carter (1) par un dispositif de fixation à broches radiales.

11. Capotages structuraux selon la revendication précédente caractérisés en ce que les moyens de serrage du capotage intérieur (7) comprennent au moins un vérin (43) disposé transversalement par rapport à l'axe du moteur.

12. Capotages structuraux selon l'une des revendications précédentes caractérisés en ce que les deux coquilles (8, 9) de capotage intérieur (7) sont articulées par leur bord longitudinal supérieur autour de charnières montées sur une plaque (10) supportée de façon flottante entre la bride amont (6) et la bride aval (11) du moteur.

13. Capotages structuraux selon la revendication 12 caractérisés en ce que la plaque flottante (10) comporte une ouverture pour le passage de moyens de fixation amont du moteur à la structure support (4).

14. Capotages structuraux selon l'une des revendications 11 à 13 caractérisés en ce que les extrémités de vérin (43) sont attachées chacune à une coquille (8, 9) pour exercer une force tendant à les rapprocher.

15. Capotages structuraux selon l'une des revendications 12 à 14 caractérisés en ce qu'un système de verrouillage relie les bords longitudinaux inférieurs des coquilles.

16. Capotages structuraux selon l'une des revendications 1 à 11 pour lesquels le capotage extérieur est lui-même composé de coquilles (37, 38), articulées par leur bord longitudinal supérieur autour de charnière (44) solidaire de la structure support (4) du moteur et ou chacune des coquilles (8, 9) du capotage intérieur (7) est supportée par la coquille extérieure correspondante par l'intermédiaire de moyens de liaison, caractérisés en ce que lesdits moyens de liaison sont flexibles de façon à minimiser les transferts de charge du capotage intérieur au capotage extérieur.

17. Capotages structuraux selon la revendication précédente caractérisés en ce que lesdits moyens flexibles comprennent un joint à glissière (41, 42) comportant un rail à section cylindrique solidaire d'une coquille (37, 38) du capotage extérieur, dans lequel est logé, à rotation, un élément tubulaire solidaire de la coquille (8, 9) correspondante.

18. Capotages structuraux selon l'une des revendications 16 ou 17 caractérisés en ce que lesdits moyens flexibles comprennent des éléments flexibles verticalement entre la coquille intérieure (8, 9) et la coquille extérieure (37, 38) correspondante.

19. Capotages structuraux selon la revendication 11 et l'une des revendications 16 et 18 caractérisés en ce que les extremites de verin (43) sont fixées chacune à une coquille (8, 9) du capotage intérieur.

20. Capotages structuraux selon la revendication 11 et l'une des revendications 16 à 18 caractérisés en ce que les vérins (43) sont fixés par une extrémité à une plaque support (46) solidaires du carter et par l'autre extrémité alternativement à l'une et à l'autre coquille (8, 9) du capotage intérieur.

21. Capotages structuraux selon l'une des revendications 19 et 20 caractérisés en ce que les vérins assurent également l'ouverture du capotage intérieur pour les opérations de maintenance du moteur.

22. Capotages structuraux selon l'une des revendications 16 à 21 caractérisés en ce que un mécanisme inverseur de poussée (47, 48, 49) est incorporé dans le capotage extérieur.

**Patentansprüche**

1. Strukturelle Verkleidungsanordnung, die zur Steifheit der Gesamtheit eines Zweikreis-Turbostrahltriebwerks mit getrennten Strömungskreisen beiträgt, mit einer strukturellen Innenverkleidung (7), die aus zwei seitlichen Schalen (8, 9) besteht, welche mit Hilfe von Spannmitteln zwischen einem vorderen Flansch, (6) und einem hinteren Flansch (11) eines Motorgehäuses (1) befestigt sind, sowie mit einer die Sekundärströmung leitenden Außenverkleidung (5), dadurch gekennzeichnet, daß zwischen der strukturellen Innenverkleidung und einem der Flansche des Motorgehäuses (1) wenigstens eine Befestigungsvorrichtung (6A, 8A, 9A; 15; 20-23; 24-25) vorgesehen ist, die die freie thermische Ausdehnung des Motorgehäuses (1) ermöglicht.

2. Strukturelle Verkleidungsanordnung nach Anspruch 1, dadurch gekennzeichnet, daß die Befestigungsvorrichtung ein Gleitelement umfaßt, das die freie differentielle Längsausdehnung zwischen dem Motorgehäuse (1) und der Innenverkleidung (7) ermöglicht.

3. Strukturelle Verkleidungsanordnung nach Anspruch 2, dadurch gekennzeichnet, daß die die thermische Ausdehnung ermöglichende Befestigungsvorrichtung von wenigstens einer ringförmigen Auflage (8A, 9A) an dem inneren Rand eines Endbereichs der strukturellen Innenverkleidung (7) und von der Außenfläche eines Zylinderrings (6A) gebildet ist, die von einem Flansch (6) des Motorgehäuses (1) getragen ist, wobei die ringförmige Auflage von zwei Halbringteilen gebildet ist, die gegen die Oberfläche des Zylinderrings verspannt sind.

4. Strukturelle Verkleidungsanordnung nach Anspruch 2, dadurch gekennzeichnet, daß die die thermische Ausdehnung ermöglichende Befestigungsvorrichtung von einer Vorrichtung mit wenigstens drei axialen Verbindungsdornen (20) gebildet ist, die in regelmäßigen Abständen angeordnet sind und von denen ein Endbereich mit der Bohrung eines sphärischen Körpers (22) zusammenwirkt, wobei eines der beiden Elemente, d.h. der Verbindungsdorn oder der sphärische Körper, mit einem Halterungsteil (6) des Motorgehäuses fest verbunden ist und das

andere Element mit einem kreisförmigen Rahmen (23) fest verbunden ist, auf dem die genannten seitlichen Schalen (8, 9) über den Innenrand eines ihrer Endbereiche fixiert und verspannt sind.

5. Strukturelle Verkleidungsanordnung nach Anspruch 2, dadurch gekennzeichnet, daß die die thermische Ausdehnung ermöglichende Befestigungsvorrichtung aus zwei koaxialen Ringen (24, 25) besteht, die ineinander angeordnet sind und an ihren einander zugewandten Flächen wenigstens drei Nuten (26) sowie damit zusammenwirkende Zähne (27) aufweisen, die in Umfangsrichtung verteilt angeordnet sind und zwischen denen ein radiales Spiel vorhanden ist, und daß einer der Ränder eines Endbereichs jeder der seitlichen Schalen (8, 9) auf demjenigen Ring (24) befestigt und verspannt ist, der außerhalb des anderen Rings (25) liegt, wobei letzterer mit einem Halterungsteil (6) des Motorgehäuses fest verbunden ist.

6. Strukturelle Verkleidungsanordnung nach Anspruch 1, dadurch gekennzeichnet, daß die die thermische Ausdehnung ermöglichende Befestigungsvorrichtung aus einer Vorrichtung mit wenigstens drei radialen Verbindungsdornen (15) besteht, die in regelmäßigen Abständen angeordnet sind, wobei ein Ende (19) dieser Verbindungsdorne in einem Halterungsteil (14) des Motorgehäuses (1) befestigt ist und das andere Ende mit der Bohrung eines sphärischen Körpers (18) zusammenwirkt, der in einem an dem Motorgehäuse befestigten Lager (17) gelagert ist.

7. Strukturelle Verkleidungsanordnung nach einem der Ansprüche 2 bis 5 und Anspruch 6, dadurch gekennzeichnet, daß zwei die thermische Ausdehnung ermöglichende Befestigungsvorrichtungen für die Befestigung der Innenverkleidung vorgesehen sind, wobei die Innenverkleidung (7) auf der stromaufwärts gelegenen Seite mittels einer ein axiales Gleitelement enthaltenden Vorrichtung und auf der stromabwärts gelegenen Seite mittels einer Vorrichtung mit radialen Verbindungsdornen (15) befestigt ist.

8. Strukturelle Verkleidungsanordnung nach einem der Ansprüche 2 bis 5 und Anspruch 6, dadurch gekennzeichnet, daß zwei die thermische Ausdehnung ermöglichende Befestigungsvorrichtungen für die Befestigung der Innenverkleidung vorgesehen sind, wobei die Innenverkleidung (7) auf der stromaufwärts gelegenen Seite mittels einer Vorrichtung mit radialen Verbindungsdornen (15) und auf der stromabwärts gelegenen Seite mittels einer ein axiales Gleitelement enthaltenden Vorrichtung befestigt ist.

9. Strukturelle Verkleidungsanordnung nach Anspruch 7 oder 8, dadurch gekennzeichnet, daß die ein axiales Gleiten ermöglichende Vorrichtung axiale Dorne besitzt, die gegenüber den radialen Verbindungsdornen der anderen Vorrichtung versetzt angeordnet sind.

10. Strukturelle Verkleidungsanordnung nach Anspruch 7 bis 9, dadurch gekennzeichnet, daß der stromabwärts gelegene Rand jeder Schale (8, 9) der Innenverkleidung sich über eine Zahn-Ringnut-Verbindung (13, 12) auf einem Tragring (14) abstützt, der seinerseits über eine Befestigungsvorrichtung mit radialen Verbindungsdornen mit dem Motorgehäuse (1) verbunden ist.

11. Strukturelle Verkleidungsanordnung nach dem vorhergehenden Anspruch, dadurch gekennzeichnet, daß die Spannmittel der Innenverkleidung wenigstens eine quer zur Motorachse angeordnete Hubzylinderanordnung (43) umfassen.

12. Strukturelle Verkleidungsanordnung nach einem der vorhergehenden Ansprüche, dadurch gekennzeichnet, daß die beiden Schalen (8, 9) der Innenverkleidung (7) mit ihrem oberen Längsrand an Scharnieren angelenkt sind, die an einer Platte (10) montiert sind, die zwischen dem stromaufwärts gelegenen Flansch (6) und dem stromabwärts gelegenen Flansch (11) des Motorgehäuses schwimmend gelagert ist.

13. Strukturelle Verkleidungsanordnung nach Anspruch 12, dadurch gekennzeichnet, daß die schwimmend gelagerte Platte (10) eine Öffnung für den Durchgang von Mitteln zur Befestigung der stromaufwärts gelegenen Seite des Motors an der Tragstruktur (4) aufweist.

14. Strukturelle Verkleidungsanordnung nach einem der vorhergehenden Ansprüche 11 bis 13, dadurch gekennzeichnet, daß die Enden der Hubzylinderanordnung(en) (43) jeweils an einer der Schalen (8, 9) derart befestigt sind, daß sie auf diese eine auf eine Annäherung ausgerichtete Kraft ausüben.

15. Strukturelle Verkleidungsanordnung nach einem der Ansprüche 12 bis 14, dadurch gekennzeichnet, daß die unteren Längsränder der Schalen durch ein Verriegelungssystem verbunden sind.

16. Strukturelle Verkleidungsanordnung nach einem der Ansprüche 1 bis 11, bei der die Außenverkleidung selbst aus Schalen (37, 38) zusammengesetzt ist, die an ihrem oberen Längsrand an einem mit der Tragkonstruktion (4) des Motors fest verbundenen Scharnier (44) angelenkt sind, und bei der jede der Schalen (8, 9) der Innenverkleidung (7) an der zugeordneten Schale der Außenverkleidung dürch Verbindungsmittel gehalten ist, dadurch gekennzeichnet, daß diese Verbindungsmittel derart flexibel sind, daß sie die Übertragung von Belastungen von der Innenverkleidung zu der Außenverkleidung minimieren.

17. Strukturelle Verkleidungsanordnung nach dem vorhergehenden Anspruch, dadurch gekennzeichnet, daß die flexiblen Mittel ein Schubgelenk mit einer mit einer Schale (37, 38) der Außenverkleidung fest verbundenen Schiene mit zylindrischem Querschnitt umfassen, in der ein mit der zugeordneten Schale (8, 9) der Innenverkleidung fest verbundenes rohrförmiges Element drehbar aufgenommen ist.

18. Strukturelle Verkleidungsanordnung nach einem der Ansprüche 16 oder 17, dadurch gekennzeichnet, daß die genannten flexiblen Mittel Elemente umfassen, die zwischen der Schale (8, 9) der Innenverkleidung und der zugeordneten Schale (37, 38) der Außenverkleidung vertikal flexibel sind.

19. Strukturelle Verkleidungsanordnung nach Anspruch 11 und einem der Ansprüche 16 und 18, dadurch gekennzeichnet, daß die Enden der Hubzylinderanordnung(en) (43) jeweils an einer Schale (8, 9) der Innenverkleidung befestigt sind.

20. Strukturelle Verkleidungsanordnung nach Anspruch 11 und einem der Ansprüche 16 bis 18, dadurch gekennzeichnet, daß die Hubzylinderanordnungen (43) mit einem Ende an einer fest mit dem Motorgehäuse verbundenen Trägerplatte (46) und mit dem anderen Ende abwechselnd an der einen und der anderen Schale (8, 9) der Innenverkleidung befestigt sind.

21. Strukturelle Verkleidungsanordnung nach einem der Ansprüche 19 und 20, dadurch gekennzeichnet, daß die Hubzylinderanordnungen auch das Öffnen der Innenverkleidung für Wartungsarbeiten an dem Motor ermöglichen.

22. Strukturelle Verkleidungsanordnung nach einem der Ansprüche 16 bis 21, dadurch gekennzeichnet, daß in der Aussenverkleidung ein Schubumkehrmechanismus (47, 48, 49) eingebaut ist.

**Claims**

1. Structural cover assembly serving to provide rigidity in the overall assembly of a turbojet engine with two separate flow paths comprising an inner structural cover member (7) formed by two lateral shells (8, 9), secured through the intermediary of connecting means between an upstream flange (6) and a downstream flange (11) of an engine casing (1) and an outer cover member (5) defining the secondary flow, characterised in that at least one connecting means (6A, 8A, 9A; 15, 20-23; 24-25) enabling the free thermal expansion of the engine casing is provided between the inner structural cover member and one of the flanges of the engine casing.

2. Structural cover assembly according to claim 1 characterised in that the connecting device comprises a sliding means permitting free longitudinal differential expansion between the casing (1) and inner cover member (7).

3. Structural cover assembly according to claim 2, characterised in that the expansion connecting device is constituted by at least one annular seating (8A, 9A) of the inner edge of one end of the inner structural cover member (7) and by the outer surface of a cylindrical annular member (6A) carried by one flange (6) of the engine casing (1), the annular seating being formed by two semi-annular parts secured against the surface of the annular member.

4. Structural cover assembly according to claim 2, characterised in that the expansion securing device is constituted by a device with at least three axial regularly spaced connecting pins (20) of which one end co-operates with the bore of a spherical body (22); one of the two elements, pin or spherical body being rigid with a support (6) of the engine casing, the other element being rigid with a circular frame (23) on which is secured and locked each of the lateral shells (8, 9) by the inner edge of one of its ends.

5. Structural cover assembly according to claim 2, characterised in that the expansion connecting device is constituted by two co-axial rings (24, 25) arranged one within the other and comprising on their opposing faces at least three slots (26) and teeth (27) cooperating therewith peripherally distributed and permitting between them a radial clearance; one of the edges of one end of each lateral shell (8, 9) being secured and locked on the ring (24) outwardly of the other (25), the latter being rigid with the support (6) of the engine casing.

6. Structural cover assembly according to claim 1, characterised in that the expansion securing device is constituted by a device with at least three regularly-spaced radial connecting pins (15), one end of the pins (19) being secured in a support (14) of the engine casing (1), the other end co-operating with the bore of a spherical body (18) held in a seating (17) secured to the engine casing.

7. Structural cover assembly according to one of claims 2 to 5 and claim 6, characterised in that two expansion securing devices are provided for securing the inner cover member; the said interior cover member (7) being secured at the upstream end by a device comprising an axial sliding means and the downstream end by a device with radial pins (15).

8. Structural cover assembly according to one of claims 2 to 5 and claim 6, characterised in that two expansion securing devices are provided for securing of the inner cover member (7); the said inner cover member being secured at the upstream end by a device with radial pins (15) and the downstream end by a device comprising an axial sliding means.

9. Structural cover assembly according to one of claims 7 or 8, characterised in that the axial sliding device being provided with axial pins, the latter are disposed in alternate rows in relation to the radial pins of the other device.

10. Structural cover assembly according to claims 7 to 9, characterised in that the downstream edge of each shell (8, 9) of the inner cover member is provided with support through a connection of the annular tooth-groove type (13, 12) on a ring support (14), itself connected to the casing (1) through a securing device with radial pins.

11. Structural cover assembly according to the preceding claim, characterised in that the securing means of the inner cover member (7) comprise at least one actuator (43) disposed transversely with respect to the axis of the engine.

12. Structural cover assembly according to one of the preceding claims, characterised in that the two shells (8, 9) of the inner cover member (7) are pivoted at their upper longitudinal edge about hinges mounted on a plate (10) supported in a floating manner between the upstream flange (6) and the downstream flange (11) of the engine.

13. Structural cover assembly according to claim 12, characterised in that the floating plate (10) comprises an opening for the passage of upstream securing means of the engine to the support structure (4).

14. Structural cover assembly according to one of claims 11 to 13, characterised in that the ends of the actuator (43) are secured each to one shell (8, 9) in order to exert a force tending to move them together.

15. Structural cover assembly according to one of claims 12 to 14, characterised in that a locking system connects the lower longitudinal edges of the shells.

16. Structural cover assembly according to one of claims 1 to 11 for which the outer cover member is itself built up from shells (37, 38) pivoted by their upper longitudinal edge about a hinge (44) rigid with the support structure (4) of the engine and or each of the shells (8, 9) of the inner cover member (7) is supported by the corresponding outer shell through the intermediary of connecting means, characterised in that the said connecting means are made flexible in such a manner as to minimize the transfer of loading on the inner cover member to the outer cover member.

17. Structural cover assembly according to the preceding claim, characterised in that the said flexible means comprise a sliding seal (41, 42) comprising a rail of cylindrical section rigid with one shell (37, 38) of the outer cover member, in which is located, for rotation, a tubular element rigid with the corresponding shell (8, 9).

18. Structural cover assembly according to one of claims 17 or 18, characterised in that the said flexible means comprise vertical flexible elements between the inner shell (8, 9) and the outer shell (37, 38) corresponding thereto.

19. Structural cover assembly according to claim 11 and one of claims 16 and 18, characterised in that the ends of the actuator (43) are each secured to one shell (8, 9) of the inner cover member.

20. Structural cover assembly according to claim 11 and one of claims 16 to 18, characterised in that the actuators (43) are secured at one end to a support plate (46) rigid with the casing and by the other end alternatively with one or the other of the shells (8, 9) of the inner cover member.

21. Structural cover assembly according to one of claims 19 and 20, characterised in that the actuators both provide for the opening of the inner cover member for the operations of maintenance of the engine.

22. Structural cover assembly according to one of claims 16 to 21, characterised in that a thrust reverser mechanism (47, 48, 49) is incorporated within the outer cover member.

FIG:1

FIG.:2

FIG.:4

FIG.:3

FIG.:5

FIG.:6

FIG.:7

FIG.:8A

FIG.:8B

FIG.:9B

FIG.:9A

FIG.:10 B

FIG.:10A

FIG.: 11

46

43

43

FIG.: 14

59    57

51
52

55

54

53

48    58    56

39

FIG.:12B

FIG.:12A

47

48

49

6

6

47 49

48

0 155 887

FIG.: 13A

FIG.: 13B

0 155 887